# EUROPEAN PATENT SPECIFICATION

(11) **EP 0 481 447 B1**
(45) Date of publication and mention of the grant of the patent: **03.09.1997**
(21) Application number: 91117643.6
(22) Date of filing: 16.10.1991
(51) Int. Cl.: H04L 12/56

(54) **Method of controlling communication network incorporating virtual channels exchange nodes and virtual paths exchange nodes, and the said communication network**
Verfahren zur Steuerung eines Kommunikationsnetzes mit Knoten zur Vermittlung von virtuellen Kanälen und Knoten zur Vermittlung von virtuellen Wegen, sowie das genannte Kommunikationsnetz
Méthode de commande d'un réseau de communication incluant des noeuds de commutations de canaux virtuels et des noeuds de commutation de chemin virtuel ainsi que ledit réseau de communication

(30) Priority: 16.10.1990 JP 275381/90
(43) Date of publication of application: 22.04.1992
(73) Proprietor: KABUSHIKI KAISHA TOSHIBA, Kawasaki-shi, Kanagawa-ken 210 (JP)
(72) Inventor: Katsube, Yasuhiro, Kawasaki-shi, Kanagawa-ken (JP); Kodama, Toshikazu, Yokohama-shi, Kanagawa-ken (JP)
(74) Representative: Lehn, Werner, Dipl.-Ing.

(56) References cited:
- WO-A-89/09522
- IEEE GLOBAL TELECOMMUNICATIONS CONFERENCE & EXHIBITION VOL. 3, 1988, HOLLYWOOD, FLORIDA, NOV. 28 - DEC. 1 pages 1272 - 121276 SATORU OHTA ET AL ' A DYNAMICALLY CONTROLLABLE ATM TRANSPORT NETWORK BASED ON THE VIRTUAL PATH CONCEPT '

## Description

### BACKGROUND OF THE INVENTION

### Field of the Invention

The present invention relates to a method of controlling a communication network such as an ATM (Asynchronous Transfer Mode) network which incorporates a number of VP (virtual path) exchange nodes and VC (virtual channel) exchange nodes, and to the said communication network.

### Description of the Background Art

In recent years, a progress has been made for developing an ATM network as a network architecture for realizing a broad band company integrating network and a high speed and broad band data communication in a form of B-ISDN (broadband-integrated service digital network) system. In the ATM network, data are transmitted in units of cells, and each cell has a header containing a VCI (virtual channel identifier) for identifying a connection between end-users and a VPI (virtual path identifier) for identifying a logical communication path, such that the desired transfer of the cell is achieved at a number of exchange nodes according to these VCI and VPI.

There are two types of exchange node in the ATM network, including a VC exchange node which carries out the exchange operation for each VC according to the VCI, and a VP exchange node which carries out the exchange operation for each VP according to the VPI. The VP is set up between the VC exchange nodes, and provides a direct logical path between the VC exchange nodes through one or more VP exchange nodes. The VP exchange node carries out the exchange operation in units of VP by using the VPI only regardless of the VCI, while the VC exchange nodes carries out the exchange operation in units of VC by using both the VCI and the VPI. The set up control for VC including operations such as a admission control operation and a routing table renewal operation is carried out only at the VC exchange nodes.

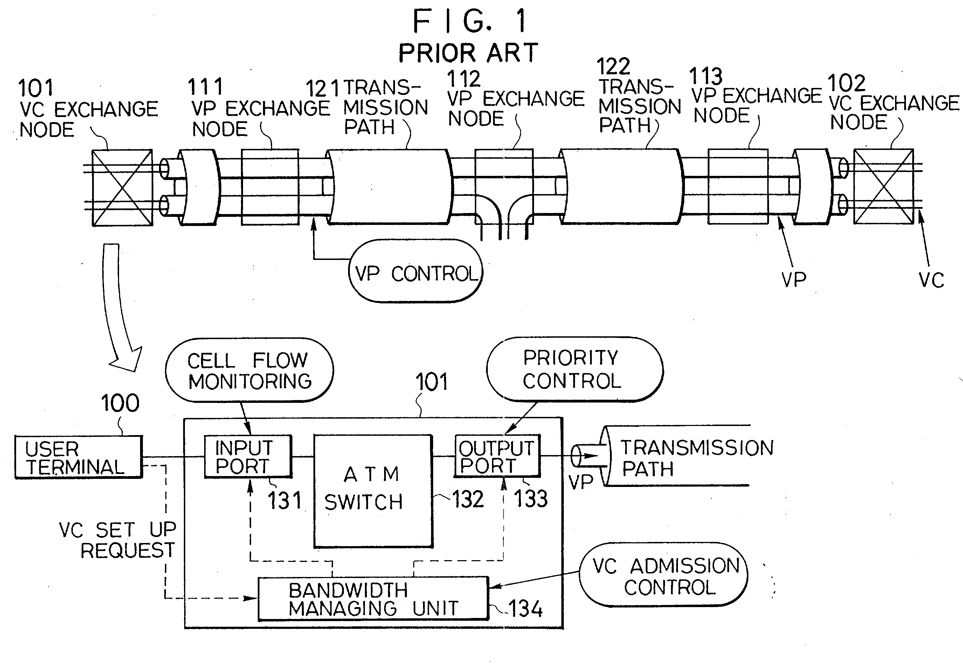

A conventional ATM network using both of the VC exchange nodes and the VP exchange nodes has a schematic configuration shown in Fig. 1, where the network includes: a VC exchange node 101 for receiving the VCs from a user terminal 100 at which the admission of the VCs is determined and the admitted VCs are multiplexed and outputted to VPs; a VP exchange node 111 for receiving the VPs from the VC exchange node 101 and multiplexing and outputting them to a transmission path 121; a VP exchange node 112 for receiving the multiplexed VPs from the transmission path 121 and switching them into a transmission path 122 as well as other transmission paths (not shown); a VP exchange node 113 for receiving the multiplexed VPs from the transmission path 122 and separating and outputting them; and a VC exchange node 102 at which the VCs are separated from the VPs received from the VP exchange node 113 and transmitted to another user terminal (not shown).

As shown in Fig. 1, the VC exchange node 101 has: an input port 131 at which the cell flow for each VC arriving from the user terminal 100 is monitored; an ATM switch 132 for performing a switching operation on the VCs received by the input port 131; an output port 133 for performing the priority control at its buffer (when the priority control is necessary), multiplexing the VCs outputted by the ATM switch 132 into VPs and outputting them to a transmission path; and a bandwidth managing unit 134 for performing the VC admission control in response to the VC set up requests from the user terminal 100 in which the number of VCs admitted at the input port 131 and the allocation of the VCs to be outputted at the output port 133 are controlled in order to secure the required quality of service. Also, separate controlling in units of VP is provided at each of the VP exchange nodes 111, 112, and 113.

Now, in the ATM network, it is preferable to achieve a highest transmission bandwidth utilization efficiency within a limit of maintaining a prescribed cell transfer quality. To this end, it is necessary for the network to carry out an appropriate bandwidth allocation control by constantly comprehending the cell transfer qualities in the network which depend on a loading state of the network at each moment.

In the VP based ATM network, two levels of such a bandwidth allocation control will be necessary. Namely, a control of the allocation of the VC to the VP, and a control of the allocation of the VP to the physical transmission path. The former is a control performed for each call (each VC) for which only the VC exchange nodes will be relevant. The latter is a control performed on a basis of a relatively long term traffic demand, in which the VP capacity and the route can be changed according to the loading state of the network.

In order to carry out these bandwidth allocation controls appropriately, it is necessary to know what kind of influence each level of bandwidth allocation has on the cell transfer quality in the network, where the following facts should be accounted for.

In carrying out the allocation of the VC to the VP, it becomes necessary to estimate the cell transfer quality resulting from the multiplexing of the VC into the VP according to the prescribed bandwidth (cell flow) specified to each VP and the bandwidth (cell flow) specified for each VC. However, the VP will be further multiplexed into the transmission path, so that in the actual cell transfer phase the cell transfer quality will be affected by the cell flows of the other VPs which are multiplexed together.

On the other hand, the bandwidth (cell flow) of each VP is controlled to be within the prescribed bandwidth by the control of the allocation of the VC to the VP. However, in the actual cell transfer phase, the cell flows of various VCs belonging to various VPs transmitted from a number of input transmission paths will be switched to the output transmission path of a target VP, such that there is a possibility for violating the prescribed bandwidth specified to the target VP depending on the arrival timing of the cell flows arriving at the target VP from the different input transmission paths.

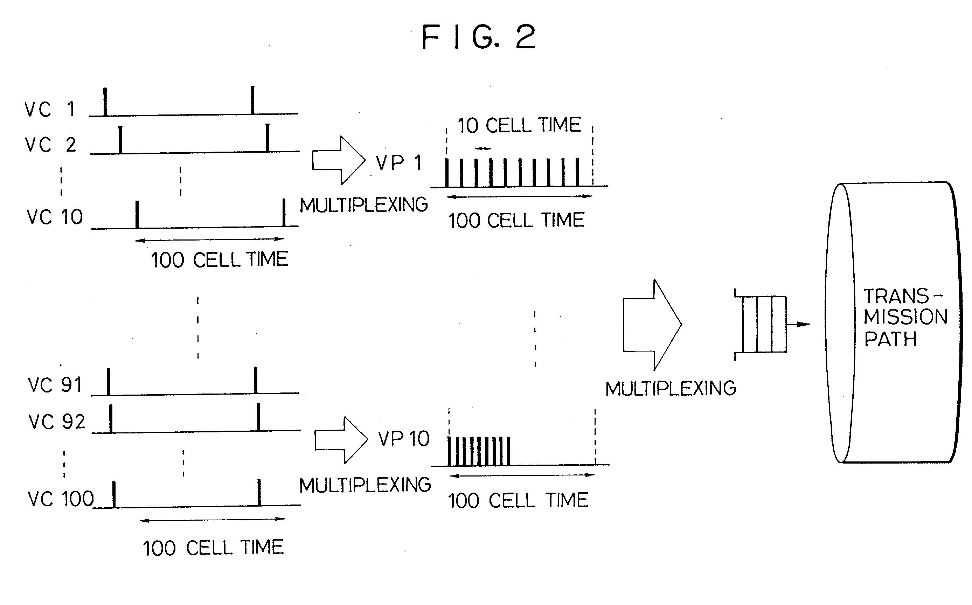

For example, as shown in Fig. 2, when the prescribed minimum cell interval in the VP is 10 cell time, the cells which are evenly distributed within the 100 cell time such as those of the VP1 obtained from the VC1 to VC10 (prescribed minimum cell interval for each of these VCs is set to be 100 cell time) cause no problem, but the cells which are unevenly distributed within the 100 cell time such as those of the VP10 obtained from the VC91 to VC100 (prescribed minimum cell interval for each of these VCs is set to be 100 cell time) will cause a problem as they are actually beyond the given capacity of the VP, and this will eventually affect the cell transfer qualities of the other VPs as they are multiplexed together on the transmission path.

In addition, in a case the allocation of the VC to the VP is carried out by allowing the bandwidth of the VP to exceed the prescribed bandwidth temporarily on a basis of the statistical multiplexing effect, there is a possibility for violating the prescribed bandwidth specified to the target VP regardless of the arrival timing of the cell flows arriving at the target VP from the different input transmission paths.

Now, in a case the actual cell flow of a certain VP is violating the bandwidth prescribed to this VP, such a VP can statistically influence the other VPs which shares the same transmission path with that VP beyond the limit of the influence estimated at a time each of these other VPs is allocated to that transmission path, such that there is a danger of causing the lower cell transfer qualities for the other VPs than expected.

In order to avoid such a problematic situation, it is necessary to regularly monitor the cell flow at each VP and carry out a transfer control capable of maintaining the cell flow of each VP within the prescribed bandwidth. Moreover, it is necessary to establish the method of specifying the cell transfer quality at the VC exchange node and the VP exchange node as well as the method of estimating the end-to-end cell transfer quality for VCs in such a transfer control.

However, in a conventional ATM network, a need for such a transfer control has been neglected and therefore such a method of specifying the cell transfer quality at the VC exchange node and the VP exchange node and a method of estimating the end-to-end cell transfer quality for the VCs in such a transfer control have not been established.

### SUMMARY OF THE INVENTION

It is therefore an object of the present invention to provide a method of controlling the communication network incorporating VC exchange nodes and the VP exchange nodes such that the cell flow of each VP can be maintained within the prescribed characteristic while the end-to-end cell transfer quality for VCs can be estimated easily and accurately.

According to one aspect of the present invention there is provided a method of controlling communication network including virtual channel (VC) exchange nodes and virtual path (VP) exchange nodes, where each of the VC exchange nodes carries out exchange operations in units of VC, each of the VP exchange nodes carries out exchange operations in units of VP, and VPs are provided between the VC exchange nodes through the VP exchange nodes, the method comprising the steps of: (a) controlling a cell transfer from the VC exchange nodes to the VP exchange nodes such that a cell flow of each VP is controlled within prescribed traffic characteristics specified to said each VP; (b) specifying a cell transfer quality at each of the VC exchange node in terms of a first cell transfer quality dependent on a control of the cell transfer at the step (a), and a second cell transfer quality independent on the control of the cell transfer at the step (a); (c) specifying a cell transfer quality at each of the VP exchange node by a third cell transfer quality independent on the control of the cell transfer at the step (a) alone; (d) estimating an end-to-end cell transfer quality for each VC in the communication network in terms of the cell transfer quality of each of the VC exchange nodes specified at the step (b) and the cell transfer quality of each of the VP exchange nodes specified at the step (c); and (e) carrying out a bandwidth management in the communication network such that the end-to-end cell transfer quality estimated at the step (d) becomes higher than a desired quality of service.

According to another aspect of the present invention there is provided a communication network, comprising: virtual channel (VC) exchange nodes, each of the VC exchange nodes carrying out exchange operations in units of VC; virtual path (VP) exchange nodes, each of the VP exchange nodes carrying out exchange operations in units of VP, where VPs are provided between the VC exchange nodes through the VP exchange nodes; output control means for controlling a cell transfer from the VC exchange nodes to the VP exchange nodes such that a cell flow of each VP is controlled within prescribed traffic characteristics specified to said each VP; and network control means for controlling the cell transfer in the communication network by: specifying a cell transfer quality at each of the VC exchange node in terms of a first cell transfer quality dependent on a control of the cell transfer by the VC output control means, and a second cell transfer quality independent on the control of the cell transfer by the VC output control means; specifying a cell transfer quality at each of the VP exchange node by a third cell transfer quality independent on the control of the cell transfer by the VC output control means alone; estimating an end-to-end cell transfer quality for each VC in the communication network in terms of the cell transfer quality of each of the VC exchange nodes and the cell transfer quality of each of the VP exchange nodes; and carrying out a bandwidth management in the communication network such that the estimated end-to-end cell transfer quality becomes higher than a desired quality of service.

Other features and advantages of the present invention will become apparent from the following description taken in conjunction with the accompanying drawings.

### BRIEF DESCRIPTION OF THE DRAWINGS

Fig. 1 is a schematic configuration diagram for a conventional ATM network using the VC exchange nodes and the VP exchange nodes.

Fig. 2 is a diagram of cell flows in the VCs and VPs, illustrating a problem arising in the conventional ATM network.

Fig. 3 is a schematic diagram for one embodiment of an ATM network using the VC exchange nodes and the VP exchange nodes according to the present invention.

Fig. 4 is a detail diagram for a part of the ATM network of Fig. 3.

Fig. 5 is a schematic diagram for a part of the ATM network of Fig. 3, showing a detail view of a VP shaping unit provided at a VC exchange node.

Fig. 6 is a schematic diagram for a part of the ATM network of Fig. 3, illustrating a function of a VP shaping unit provided at a VC exchange node.

Fig. 7 is a detail diagram for an example of an ATM network according to the present invention, for explaining the operation of the present invention.

### DETAILED DESCRIPTION OF THE PREFERRED EMBODIMENTS

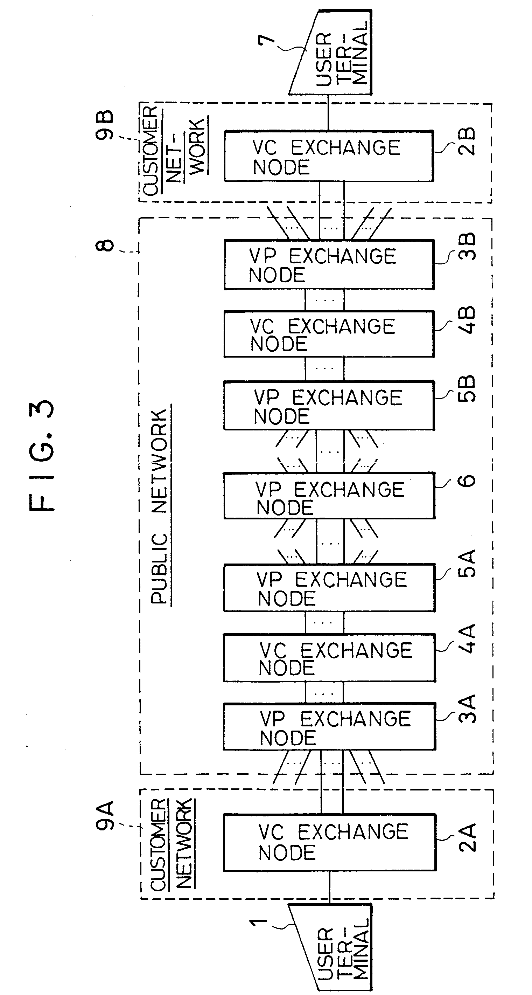

Referring now to Fig. 3, one embodiment of an ATM network using the VC exchange nodes and the VP exchange nodes will be described in detail.

In this embodiment, the ATM network generally comprises: a plurality of user terminal 1 and 7; customer networks 9A and 9B to which the user terminals 1 and 7 are connected and which are owned by a user such as a company; and a public network 8 owned by a telecommunication network carrier. The customer networks 9A and 9B includes a VC exchange node 2A and a VC exchange node 2B, respectively. On the other hand, the public network 8 includes a plurality of VC exchange nodes 4A and 4B as well as a plurality of VP exchange nodes 3A, 5A, 6, 5B, and 3B.

Here, each VP exchange node performs an exchange operation in units of VP and multiplexes or separates the cell flows to and from the transmission path in units of VP, while each VC exchange node performs an exchange operation in units of VC and multiplexes or separates the cell flows to and from the VP in units of VC, and then multiplexes or separates the cell flows to and from the transmission path in units of VP. The control of the allocation of the VPs to the transmission path including a VP capacity setting is carried out on a basis of a long term or short term traffic demand, independently from the control of the allocation of the VCs to the VPs which is carried out every time the VC set up request is received from a user.

The VP exchange nodes 3A and 3B connected with the VC exchange nodes 2A and 2B, respectively, function to combine or separate the VPs from a plurality of customer networks. The VC exchange nodes 4A and 4B connected with the VP exchange nodes 3A and 3B, respectively, function to terminate VPs and carry out the exchange operation in units of VC in the public network 8. The VP exchange nodes 5A and 5B connected with the VC exchange nodes 4A and 4B, respectively, function to transmit the cell flows to and from the other VP exchange nodes such as the VP exchange node 6 provided in the public network 8.

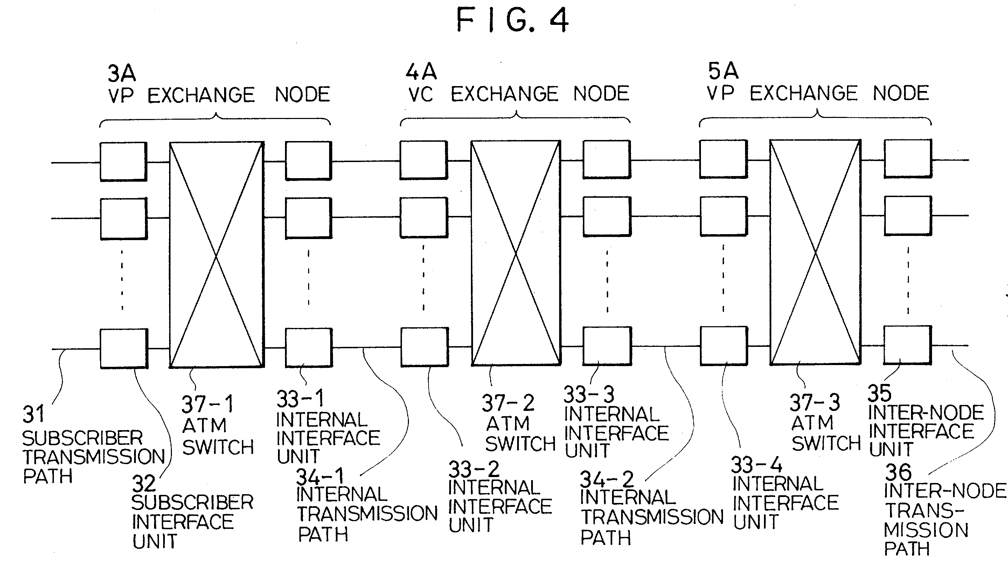

In further detail, the VP exchange nodes 3A and 5A and the VC exchange node 4A in the public network 8 has a configuration shown in Fig. 4.

The VP exchange node 3A comprises: a subscriber interface unit 32 connected to a subscriber transmission path 31; an internal interface unit 33-1 connected to an internal transmission path 34-1 between the VP exchange node 3A and the VC exchange node 4A; an ATM switch 37-1; and a control unit (not shown). The VC exchange node 4A comprises: an internal interface unit 33-2 connected to the internal transmission path 34-1; an internal interface unit 33-3 connected to an internal transmission path 34-2 between the VC exchange node 4A and the VP exchange node 5A; an ATM switch 37-2; and a control unit (not shown). The VP exchange node 5A comprises: an internal interface unit 33-4 connected to the internal transmission path 34-2; an inter-node interface unit 35 connected to an inter-node transmission path 36; an ATM switch 37-3; and a control unit (not shown). Here, each of the interface units 32, 33-1, 33-2, 33-3, 33-4, and 35 has an input interface function as well as an output interface function.

At the subscriber interface unit 32 and the internal interface unit 33-1 of the VP exchange node 3A and the internal interface unit 33-4 and the inter-node interface unit 35 of the VP exchange node 5A, the VPI to be rewritten and the output interface number are added to the header of the entered cell by looking up the header conversion table according to the VPI of the entered cell.

At the ATM switches 37-1 and 37-3 of the VP exchange nodes 3A and 5A, the cell is transferred by hardware to the desired output interface according to the output interface number in the header of the cell. In general, the cells of a plurality of VPs are multiplexed together in the cells entering from the input interface, and the cells of a plurality of VPs are multiplexed together in the cells outputted to the output interface.

At the internal interface units 33-2 and 33-3 of the VC exchange node 4A, the VPI/VCI to be rewritten and the output interface number are added to the header of the entered cell by looking up the header conversion table according to the VPI/VCI of the entered cell.

At the ATM switch 37-2 of the VC exchange node 4A, the cell is transferred by hardware to the desired output interface according to the output interface number in the header of the cell. In general, the cells of a plurality of VPs are multiplexed together in the cells entering from the input interface, and the cells of a plurality of VCs are multiplexed together in each VP. Also, the cells of a plurality of VPs are multiplexed together in the cells outputted to the output interface, and the cells of a plurality of VCs are multiplexed together in each VP.

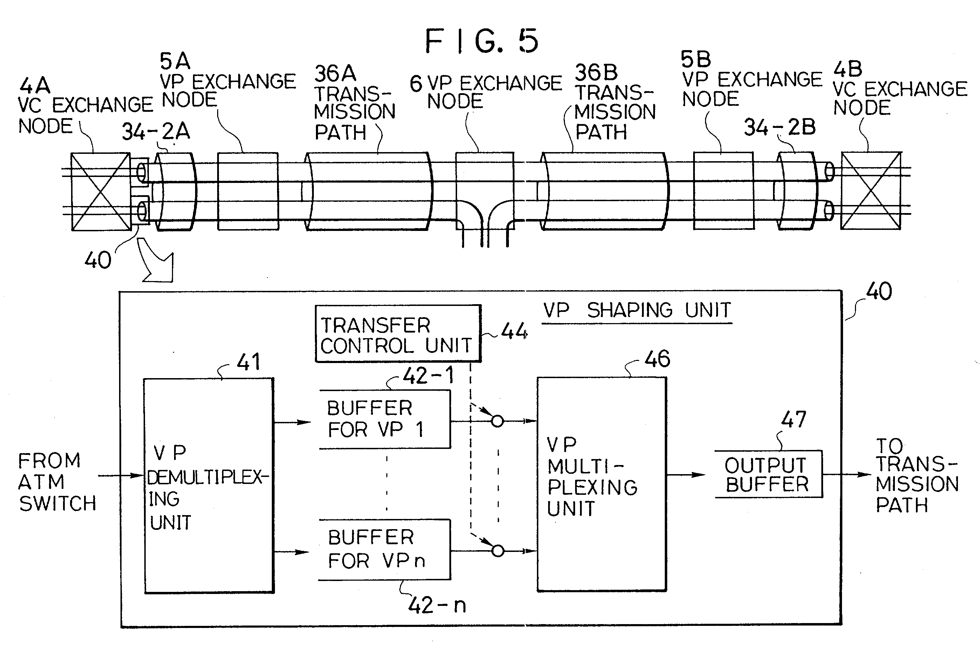

The VC exchange node 4A is further equipped with a VP shaping unit 40 shown in Fig. 5 on its internal interface unit 33-3. In the following, it is assumed that the ATM switch 37-2 of the VC exchange node 4A has a sufficiently fast operation speed and that the deterioration of the cell transfer quality at the internal interface unit 33-2 and the ATM switch 37-2 is negligibly small.

This VP shaping unit 40 comprises: a VP demultiplexing unit 41 for separating the cells received from the ATM switch 37-2 into different VPs according to the VPIs of the received cells; shaping buffers 42-1 to 42-n provided in correspondence to VPs which may be divided either physically or logically to which the cells separated by the VP demultiplexing unit 41 are stored according to their VPs; a transfer control unit 44 for controlling the output rate of the shaping buffers 42-1 to 42-n in order to control the cell flows within the prescribed bandwidth of each VP; a VP multiplexing unit 46 for multiplexing the cells outputted from the shaping buffers 42-1 to 42-n under the control of the transfer control unit 44; and an output buffer 46 for storing the multiplexed cells obtained by the VP multiplexing unit 46 before they are outputted to the internal transmission path 34-2A between the VC exchange node 4A and the VP exchange node 5A in accordance with the transmission path speed.

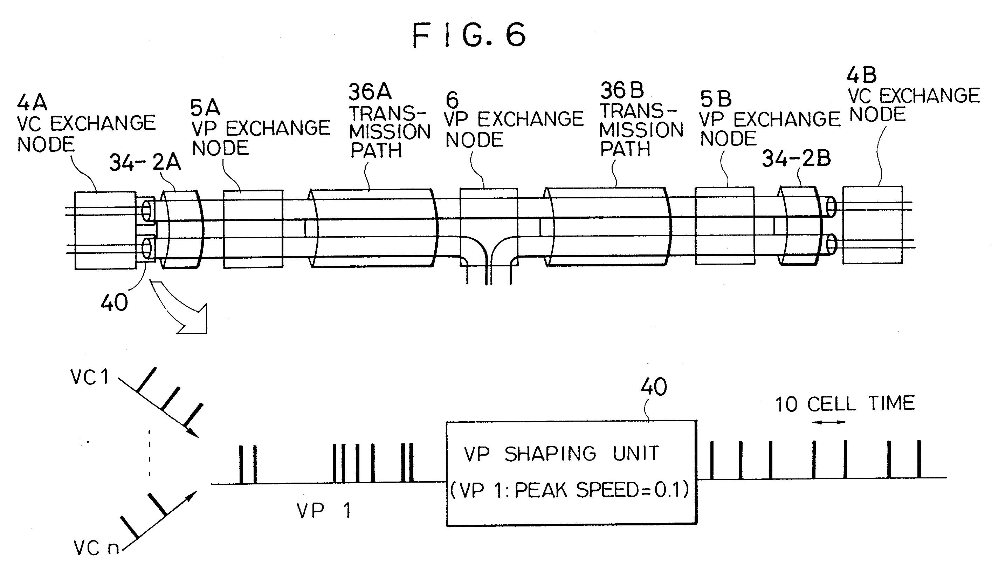

This VP shaping unit 40 functions to shape the cell flow in each VP such that the cells are outputted while maintaining the prescribed bandwidth as shown in Fig. 6.

The cells entered from the ATM switch 37-2 to the VP shaping unit 40 will pass through one of the shaping buffers 42-1 to 42-n as well as the output buffer 47, and the deterioration of the cell transfer quality such as a cell transfer delay and a cell loss in this embodiment can be attributed to these buffer effects alone.

Here, the cell transfer delay or the cell loss at the shaping buffers 42-1 to 42-n (referred hereafter as the first cell transfer quality) can be estimated from the traffic characteristics corresponding to the capacity specified to each VP and the traffic characteristics specified for each VC multiplexed in that VP. This first cell transfer quality related to the transfer control for each VP in a form of shaping can be specified to each VP at any desired level, and different levels may be specified to different VPs.

On the other hand, the cell transfer delay or the cell loss at the output buffer 47 (referred hereafter as the second cell transfer quality) can be estimated from the payload capacity of the internal transmission path and the traffic characteristics specified to each VP multiplexed in this internal transmission path which is the maximum allowable cell flow corresponding to the capacity of that VP rather than the actual cell flow in that VP.

Thus, the cell transfer quality at the VC exchange node can be represented by the first cell transfer quality related to the VP shaping and second cell transfer quality related to the multiplexing of VPs.

Now, the cell transfer quality at the VC exchange node described above varies every time a new VC is set up or released. In such a case, however, only the first cell transfer quality can be regarded as varying every time a new VC is set up or released while regarding the second cell transfer quality as unchanged. This is because the first cell transfer quality depends on the information regarding how many VCs of what kinds of characteristics are set up in each VP which changes every time a new VC is set up or released, while the second cell transfer quality depends on the information regarding how many VPs of what kinds of specified characteristics are set up in each transmission path, i.e., the predetermined capacity of each VP and a number of VPs, so that this second cell transfer quality can be considered as independent of the information regarding how many VCs are set up in each VP.

In contrast to the VC exchange node, the VP exchange node has no transfer control for each VP, and the cell flows received from the ATM switch are stored at an output buffer and then outputted to the transmission path as they are. This is because the cell flow of each VP is always controlled within the prescribed bandwidth of that VP by the transfer control at the VC exchange node before being transmitted to the VP exchange nodes, so that there is no need for the VP exchange nodes to repeat the same transfer control again.

Thus, the cell transfer quality at the VP exchange node can be represented by the second cell transfer quality due to the output buffer alone, which can be estimated from the capacity of the transmission path and the prescribed bandwidth specified in advance to each VP multiplexed in that transmission path. Consequently, the cell transfer quality at the VP exchange node can be regarded as a fixed value unaffected by the set up or release of a new VC in that VP, for which the worst possible estimation value is used.

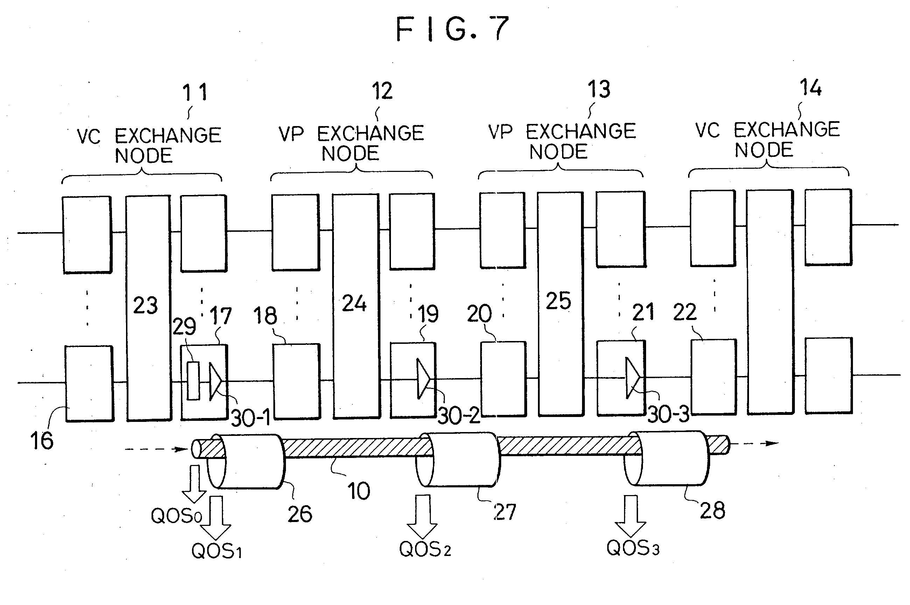

Referring now to Fig. 7, a case of transmitting the cell flow of a certain VC in a certain VP will be described in order to explain the operation in the ATM network described above.

Fig. 7 illustrates a case in which the VP 10 is provided from the VC exchange node 11 to the VC exchange node 14 through the VP exchange nodes 12 and 13. The VC exchange node 11 has an input interface unit 16, an ATM switch 23, and an output interface unit 17; the VP exchange node 12 has an input interface unit 18, an ATM switch 24, and an output interface unit 19; the VP exchange node 13 has an input interface unit 20, an ATM switch 25, and an output interface unit 21; and the VC exchange node 14 has an input interface unit 22. Also, the VC exchange node 11 and the VP exchange node 12 are connected by a transmission path 26, the VP exchange node 12 and the VP exchange node 13 are connected by a transmission path 27, and the VP exchange node 13 and the VC exchange node 14 are connected by a transmission path 28.

In the following, the ATM switches 23, 24, and 25 of the VC exchange node 11 and the VP exchange nodes 12 and 13 are assumed to have a sufficiently large throughput and the deterioration of the cell transfer quality at the ATM switch is assumed to be negligibly small.

Now, at the VC exchange node 11, a cell flow of a certain VC is transmitted from the input interface unit 16 through the ATM switch 23 to the output interface unit 17. This output interface unit 17 of the VC exchange node 11 is equipped with a VP cell transfer control function 29 and a VP multiplexing function 30-1, so that the cell transfer quality at this VC exchange node 11 can be deteriorated by the cell transfer delay or the cell loss at the shaping buffers associated with the VP cell transfer control function 29 (first cell transfer quality) as well as by the cell transfer delay or the cell loss at the output buffer associated with the VP multiplexing function 30-1 (second cell transfer quality). The estimation value for the first cell transfer quality at the VP cell transfer control function 29 is represented as QOS_{0̸} , while the estimation value for the second cell transfer quality at the VP multiplexing function 30-1 is represented as QOS₁.

Next, the cell flow is transmitted from the VC exchange node 11 through the transmission path 26 to the VP exchange node 12. Then, at the input interface unit 18, the VPI of the cell is looked up, and according to the routing information obtained from the VPI, the cell flow is transmitted through the ATM switch 24 to the output interface unit 19. This output interface unit 19 of the VP exchange node 12 is equipped with a VP multiplexing function 30-2, so that the cell transfer quality at this VP exchange node 12 can be deteriorated by the cell transfer delay or the cell loss at the output buffer associated with the VP multiplexing function 30-2 (second cell transfer quality). The estimation value for the second cell transfer quality at the VP multiplexing function 30-2 is represented as QOS₂.

Similarly, the cell flow is transmitted from the VP exchange node 12 through the transmission path 27 to the VP exchange node 13. Then, at the input interface unit 20, the VPI of the cell is looked up, and according to the routing information obtained from the VPI, the cell flow is transmitted through the ATM switch 25 to the output interface unit 21. This output interface unit 21 of the VP exchange node 13 is equipped with a VP multiplexing function 30-3, so that the cell transfer quality at this VP exchange node 13 can be deteriorated by the cell transfer delay or the cell loss at the output buffer associated with the VP multiplexing function 30-3 (second cell transfer quality). The estimation value for the second cell transfer quality at the VP multiplexing function 30-3 is represented as QOS₃.

Next, the cell flow is transmitted from the VP exchange node 13 through the transmission path 28 to the VC exchange node 14. Then, at the input interface unit 22, the VPI/VCI of the cell is looked up, and the operation in units of VC is carried out at the VC exchange node 14 which terminates the VP 10.

Thus, the estimation value for the cell transfer quality of this certain VC through the VP connection 10 is specified by the first cell transfer quality QOS_{0̸} and the second cell transfer quality QOS₁ at the VC exchange node 11, the second cell transfer quality QOS₂ at the VP exchange node 12, and the second cell transfer quality QOS₃ at the VP exchange node 13. Among these, only the first cell transfer quality QOS_{0̸} at the VC exchange node 11 varies every time a new cell is set up or released in the VP 10. The second cell transfer qualities QOS₁ , QOS₂, and QOS₃ are estimated on a basis of the capacities (upper limit for cell flow) specified in advance to the VPs multiplexed in the transmission paths, so that they can be set equal to a fixed value unaffected by the set up or release of a new VC in each VP, for which the worst possible estimation value is used. Consequently, the safe estimation can be made for these second cell transfer qualities.

As explained above, in this embodiment, the VP exchange node have no need to carry out the bandwidth management in units of VC even when a new VC is set up or released in each VP. Also, by appropriately setting the allowable value for the QOS_{0̸} for each VP which corresponds to an upper limit of a load allowed to each VP, the end-to-end cell transfer quality can be secured within a limit given by the worst possible value, and various different cell transfer qualities can be realized at the VC exchange node without affecting the VP exchange node. In other words, the quality designing at the VC exchange node and the quality designing at the VP exchange node can be separated completely.

It is to be noted that many modifications and variations of the above embodiment may be made without departing from the novel and advantageous features of the present invention. Accordingly, all such modifications and variations are intended to be included within the scope of the appended claims.

## Claims

1. A method of controlling communication network including virtual channel (VC) exchange nodes and virtual path (VP) exchange nodes, where each of the VC exchange nodes carries out exchange operations in units of VC, each of the VP exchange nodes carries out exchange operations in units of VP, and VPs are provided between the VC exchange nodes through the VP exchange nodes, the method comprising the steps of:
(a) controlling a cell transfer from the VC exchange nodes to the VP exchange nodes such that a cell flow of each VP is controlled within prescribed traffic characteristics specified to said each VP;
(b) specifying a cell transfer quality at each of the VC exchange node in terms of a first cell transfer quality dependent on a control of the cell transfer at the step (a), and a second cell transfer quality independent on the control of the cell transfer at the step (a);
(c) specifying a cell transfer quality at each of the VP exchange node by a third cell transfer quality independent on on the control of the cell transfer at the step (a) alone;
(d) estimating an end-to-end cell transfer quality for each VC in the communication network in terms of the cell transfer quality of each of the VC exchange nodes specified at the step (b) and the cell transfer quality of each of the VP exchange nodes specified at the step (c); and
(e) carrying out a bandwidth management in the communication network such that the end-to-end cell transfer quality estimated at the step (d) becomes higher than a desired quality of service.

2. The method of claim 1, wherein at the step (a), the control of the cell transfer achieves a VP shaping of the cell flows in the VPs.

3. The method of claim 2, wherein at the step (a), the VP shaping is achieved by using shaping buffer means for storing cells transmitted from each of the VC exchange node to each of the VP exchange node and transfer control means for controlling an output rate for each VP from the shaping buffer means.

4. The method of claim 3, wherein at the step (b), the first cell transfer quality is related to operations of the shaping buffer means.

5. The method of claim 4, wherein at the step (b), the first cell transfer quality is estimated by using traffic characteristics of VCs and VP.

6. The method of claim 1, wherein at the step (b), the second cell transfer quality is related to a multiplexing of VPs into a physical transmission path.

7. The method of claim 6, wherein at the step (b), the second cell transfer quality is regarded as a worst possible value predictable by using traffic characteristics of VPs and a capacity of the physical transmission path.

8. The method of claim 1, wherein at the step (b), the third cell transfer quality is related to a multiplexing of VPs into a physical transmission path.

9. The method of claim 8, wherein at the step (c), the third cell transfer quality is regarded as a worst possible value predictable by using traffic characteristics of VPs and a capacity of the physical transmission path.

10. A communication network, comprising:
virtual channel (VC) exchange nodes, each of the VC exchange nodes carrying out exchange operations in units of VC;
virtual path (VP) exchange nodes, each of the VP exchange nodes carrying out exchange operations in units of VP, where VPs are provided between the VC exchange nodes through the VP exchange nodes;
output control means (29) for controlling a cell transfer from the VC exchange nodes to the VP exchange nodes such that a cell flow of each VP is controlled within prescribed traffic characteristics specified to said each VP; and
network control means for controlling the cell transfer in the communication network by:
specifying a cell transfer quality at each of the VC exchange node in terms of a first cell transfer quality dependent on a control of the cell transfer by the output control means, and a second cell transfer quality independent on the control of the cell transfer by the VC output control means;
specifying a cell transfer quality at each of the VP exchange node by a third cell transfer quality independent on the control of the cell transfer by the output control means alone;
estimating an end-to-end cell transfer quality for each VC in the communication network in terms of the cell transfer quality of each of the VC exchange nodes and the cell transfer quality of each of the VP exchange nodes; and
carrying out a bandwidth management in the communication network such that the estimated end-to-end cell transfer quality becomes higher than a desired quality of service.

11. The network of claim 10, wherein the output control means control the cell transfer so as to achieve a VP shaping of the cell flows in the VPs.

12. The network of claim 11, wherein the output control means includes: shaping buffer means (42) for storing cells transmitted from each of the VC exchange node to each of the VP exchange node; and transfer control means (44) for controlling an output rate for each VP from the shaping buffer means.

13. The network of claim 12, wherein the first cell transfer quality is related to operations of the shaping buffer means.

14. The network of claim 13, wherein the first cell transfer quality is estimated by using traffic characteristics of VCs and VP.

15. The network of claim 10, wherein the second cell transfer quality is related to a multiplexing of VPs into a physical transmission path.

16. The network of claim 15, wherein the second cell transfer quality is regarded as a worst possible value predictable by using traffic characteristics of VPs and a capacity of the physical transmission path.

17. The network of claim 10, wherein the third cell transfer quality is related to a multiplexing of VPs into a physical transmission path.

18. The network of claim 17, wherein the third cell transfer quality is regarded as a worst possible value predictable by using traffic characteristics of VPs and a capacity of the physical transmission path.

19. A method of controlling a communication network including VC (virtual channel) exchange nodes, where each of the VC exchange nodes carries out cell exchange operations in units of VC, and VPs (virtual paths) are provided between the VC exchange nodes, the method comprising the steps of:
(a) controlling cell transfer from the VC exchange nodes such that cell flow of each VP is controlled within prescribed traffic characteristics specified to said each VP;
(b) specifying a first cell transfer quality for each of the VC exchange nodes which is dependent on a control of the cell transfer at the step (a);
(c) estimating an end-to-end cell transfer quality for each VC in the communication network in terms of the first cell transfer quality for each of the VC exchange nodes specified at the step (b) and a second cell transfer quality independent on the control of the cell transfer at the step (a); and
(d) carrying out a bandwidth management in the communication network based on the end-to-end cell transfer quality estimated at the step (c).

20. The method of claim 19,
wherein at the step (a), the control of the cell transfer achieves the VP shaping-of the cell flows in the VPs.

21. The method of claim 20,
wherein at the step (a), the VP shaping is achieved by using shaping buffers for storing cells transmitted from each of VCs to VPs and a transfer controller for controlling an output rate for each VP from the shaping buffers.

22. The method of claim 21,
wherein at the step (b), the first cell transfer quality is related to operations of the shaping buffers.

23. The method of claims 22,
wherein at the step (b), the first cell transfer quality is estimated by using traffic characteristics of VCs and each VP.

24. The method of claim 19,
wherein at the step (c), the second cell transfer quality is related to a multiplexing of VPs into a physical transmission path.

25. The method of claim 24,
wherein at the step (c), the second cell transfer quality is estimated by using traffic characteristics of VPs and a capacity of the physical transmission path.

26. The method of claim 19,
wherein at the step (a), the cell transfer from each of the VC exchange nodes is controlled by the steps of:
storing cells to be transmitted from each of the VC exchange nodes separately for each VP (virtual path) in at least logically divided shaping buffers;
controlling an output rate for each VP from the shaping buffers such that a cell flow of each VP is controlled within prescribed traffic characteristics specified to each VP;
multiplexing the cells outputted from the shaping buffers; and
storing the cells multiplexed at the multiplexing step in an output buffer, and outputting the cells stored in the output buffer to a physical transmission path according to a transmission rate of the physical transmission path.

27. A communication network, comprising:
VC (virtual channel) exchange nodes, each of the VC exchange nodes carrying out cell exchange operations in units of VC, where VPs (virtual paths) are provided between the VC exchange nodes; and
an output controller for controlling cell transfer from each of the VC exchange nodes such that cell flow of each VP is controlled within prescribed traffic characteristics specified to said each VP;
wherein each of the VC exchange nodes has a first cell transfer quality for each of the VC exchange nodes which is dependent on a control of the cell transfer by the output controller, estimates an end-to-end cell transfer quality for each VC in the communication network in terms of the first cell transfer quality for each of the VC exchange nodes and a second cell transfer quality independent on the control of the cell transfer by the output controller, and carries out a bandwidth management based on the estimated end-to-end cell transfer quality.

28. The network of claims 27,
wherein the output controller control the cell transfer so as to achieve a VP shaping of the cell flows in the VPs.

29. The network of claims 27,
wherein the output controller includes:
shaping buffers for storing cells transmitted from each of VCs to VPs; and
a transfer controller for controlling an output rate for each VP from the shaping buffers.

30. The network of claims 29,
wherein the first cell transfer quality is related to operations of the shaping buffers.

31. The network of claims 30,
wherein the first cell transfer quality is estimated by using traffic characteristcs of VCs and each VP.

32. The network of claim 27,
wherein the second cell transfer quality is related to a multiplexing of VPs into a physical transmission path.

33. The network of claim 32, wherein the second cell transfer quality is estimated by using traffic characteristics of VPs and a capacity of the physical transmission path.

34. The network of claim 27,
wherein the output controller includes:
at least logically divided shaping buffers for storing cells to be transmitted from each of the VC exchange nodes separately for each VP (virtual path); and
a transfer controller for controlling an output rate for each VP from the shaping buffers such that cell flow of each VP is controlled within prescribed traffic characteristics specified to each VP;
a multiplexer for multiplexing the cells outputted from the shaping buffers; and
an output shutter for storing the cells multiplexed by the multiplexer, and outputting the cells stored therein to a physical transmission path according to a transmission rate of the physical transmission path.

## Patentansprüche

1. Verfahren zur Steuerung eines Kommunikationsnetzwerkes mit Vermittlungsknoten für virtuelle Kanäle (VC) und Vermittlungsknoten für virtuelle Pfade (VP), wobei jeder der Vermittlungsknoten für virtuelle Kanäle Vermittlungsvorgänge in Einheiten von virtuellen Kanälen durchführt, jeder der Vermittlungsknoten für virtuelle Pfade Vermittlungsvorgänge in Einheiten von virtuellen Pfaden ausführt, und virtuelle Pfade zwischen den Vermittlungsknoten für virtuelle Kanäle durch die Vermittlungsknoten für virtuelle Pfade bereitgestellt werden, wobei das Verfahren die Schritte umfaßt:
(a) Steuerung einer Zellenübertragung aus den Vermittlungsknoten für virtuelle Kanäle an die Vermittlungsknoten für virtuelle Pfade, so daß ein Zellenfluß jedes virtuellen Pfades innerhalb vorgeschriebener Verkehrscharakteristiken, welche für den virtuellen Pfad spezifiziert sind, gesteuert wird;
(b) Spezifizieren einer Zellenübertragungsqualität an jedem Vermittlungsknoten für virtuelle Kanäle hinsichtlich einer ersten Zellenübertragungsqualität abhängig von einer Steuerung der Zellenübertragung bei Schritt (a) und einer zweiten Zellenübertragungsqualität, unabhängig von der Steuerung der Zellenübertragung bei Schritt (a);
(c) Spezifizieren einer Zellenübertragungsqualität an jedem Vermittlungsknoten für virtuelle Pfade durch eine dritte Zellenübertragungsqualität, unabhängig von der Steuerung der Zellenübertragung bei Schritt (a) allein;
(d) Abschätzen einer Zellenübertragungsqualität von Ende zu Ende für jeden virtuellen Kanal in dem Kommunikationsnetzwerk hinsichtlich der Zellenübertragungsqualität jeder der Vermittlungsknoten für virtuelle Kanäle, welche bei Schritt (b) spezifiziert wird, und der Zellenübertragungsqualität jeder der Vermittlungsknoten für virtuelle Pfade, welche in Schritt (c) spezifiziert wird; und
(e) Ausführen einer Bandbreitenverwaltung in dem Kommunikationsnetzwerk, so daß die bei Schritt (d) abgeschätzte Zellenübertragungsqualität von Ende zu Ende höher wird als eine gewünschte Dienstqualität.

2. Verfahren nach Anspruch 1, bei welchem in Schritt (a) die Steuerung der Zellenübertragung eine Formung für virtuelle Pfade der Zellenflüsse in den virtuellen Pfaden erzielt.

3. Verfahren nach Anspruch 2, bei welchem in Schritt (a) die Formung für virtuelle Pfade erzielt wird, indem eine Formungspuffervorrichtung verwendet wird, zur Speicherung von Zellen, die von jedem der Vermittlungsknoten für virtuelle Kanäle an jeden der Vermittlungsknoten für virtuelle Pfade übertragen werden, und eine Übertragungssteuervorrichtung zur Steuerung der Ausgaberate für jeden virtuellen Pfad aus der Formungspuffervorrichtung.

4. Verfahren nach Anspruch 3, bei welchem in Schritt (b) die erste Zellenübertragungsqualität mit Vorgängen der Formungspuffervorrichtung in Beziehung steht.

5. Verfahren nach Anspruch 4, bei welchem in Schritt (b) die erste Zellenübertragungsqualität abgeschätzt wird, indem Verkehrscharakteristiken von virtuellen Kanälen und virtuellen Pfaden verwendet werden.

6. Verfahren nach Anspruch 1, bei welchem in Schritt (b) die zweite Zellenübertragungsqualität mit einem Multiplexen von virtuellen Pfaden in einen physikalischen Übertragungspfad in Beziehung steht.

7. Verfahren nach Anspruch 6, in welchem bei Schritt (b) die zweite Zellenübertragungsqualität als ein schlechtestmöglicher Wert angesehen wird, welcher vorhersagbar ist, indem Verkehrscharakteristiken von virtuellen Pfaden und die Kapazität des physikalischen Übertragungspfades verwendet werden.

8. Verfahren nach Anspruch 1, bei welchem in Schritt (b) die dritte Zellenübertragungsqualität mit einem Multiplexen von virtuellen Pfaden in einen physikalischen Übertragungspfad in Beziehung steht.

9. Verfahren nach Anspruch 8, bei welchem in Schritt (c) die dritte Zellenübertragungsqualität als ein schlechtestmöglicher Wert angesehen wird, welcher vorhersagbar ist, indem Verkehrscharakteristiken von virtuellen Pfaden und eine Kapazität des physikalischen Übertragungspfades verwendet werden.

10. Kommunikationsnetzwerk, umfassend:
Vermittlungsknoten für virtuelle Kanäle (VC), wobei jeder der Vermittlungsknoten für virtuelle Kanäle Vorgänge in Einheiten von virtuellen Kanälen ausführt;
Vermittlungsknoten für virtuelle Pfade (VP), wobei jeder der Vermittlungsknoten für virtuelle Pfade Vermittlungsvorgänge in Einheiten von virtuellen Pfaden durchführt, und virtuelle Pfade zwischen den Vermittlungsknoten für virtuelle Kanäle durch die Vermittlungsknoten für virtuelle Pfade bereitgestellt werden;
eine Ausgabesteuervorrichtung (29) zur Steuerung einer Zellenübertragung aus den Vermittlungsknoten für virtuelle Kanäle an die Vermittlungsknoten für virtuelle Pfade, so daß ein Zellenfluß jedes virtuellen Pfades innerhalb vorgeschriebener Verkehrscharakteristiken, welche für jeden virtuellen Pfad spezifiziert sind, gesteuert wird; und
eine Netzwerksteuervorrichtung zum Steuern der Zellenübertragung in dem Kommunikationsnetzwerk durch:
Spezifizieren einer Zellenübertragungsqualität an jedem Vermittlungsknoten für virtuelle Kanäle hinsichtlich einer ersten Zellenübertragungsqualität, abhängig von einer Steuerung der Zellenübertragung durch die Ausgabesteuervorrichtung, und einer zweiten Zellenübertragungsqualität, unabhängig von der Steuerung der Zellenübertragung durch die Ausgabesteuervorrichtung für virtuelle Kanäle;
Spezifizieren einer Zellenübertragungsqualität an jedem Vermittlungsknoten für virtuelle Pfade durch eine dritte Zellenübertragungsqualität, unabhängig von der Steuerung der Zellenübertragung durch die Ausgabesteuervorrichtung allein;
Abschätzen einer Zellenübertragungsqualität von Ende zu Ende für jeden virtuellen Kanal in dem Kommunikationsnetzwerk hinsichtlich der Zellenübertragungsqualität jedes der Vermittlungsknoten für virtuelle Kanäle und der Zellenübertragungsqualität jedes der Vermittlungsknoten für virtuelle Pfade; und
Ausführen einer Bandbreitenverwaltung in dem Kommunikationsnetzwerk, so daß die abgeschätzte Zellenübertragungsqualität von Ende zu Ende höher wird als eine gewünschte Dienstqualität.

11. Netzwerk nach Anspruch 10, in welchem die Ausgabesteuervorrichtung die Zellenübertragung so steuert, daß eine Formung für virtuelle Pfade der Zellenflüsse in den virtuellen Pfaden erzielt wird.

12. Netzwerk nach Anspruch 11, in welchem die Ausgabesteuervorrichtung enthält: eine Formungspuffervorrichtung (42) zum Speichern von Zellen, welche von jedem der Vermittlungsknoten für virtuelle Kanäle an jeden der Vermittlungsknoten für virtuelle Pfade übertragen werden; und eine Übertragungssteuervorrichtung (44) zum Steuern einer Ausgaberate für jeden virtuellen Pfad aus der Formungspuffervorrichtung.

13. Netzwerk nach Anspruch 12, in welchem die erste Zellenübertragungsqualität mit Vorgängen der Formungspuffervorrichtung in Beziehung steht.

14. Netzwerk nach Anspruch 13, in welchem die erste Zellenübertragungsqualität abgeschätzt wird, indem Verkehrscharakteristiken von virtuellen Kanälen und virtuellen Pfaden verwendet werden.

15. Netzwerk nach Anspruch 10, in welchem die zweite Zellenübertragungsqualität mit einem Mulitplexen von virtuellen Pfaden in einen physikalischen Übertragungspfad in Beziehung steht.

16. Netzwerk nach Anspruch 15, in welchem die zweite Zellenübertragungsqualität als ein schlechtestmöglicher Wert angesehen wird, welcher vorhersagbar ist, indem Verkehrscharakteristiken von virtuellen Pfaden und eine Kapazität des physikalischen Übertragungspfades verwendet werden.

17. Netzwerk nach Anspruch 10, in welchem die dritte Zellenübertragungsqualität mit einem Multiplexen von virtuellen Pfaden in einen physikalischen Übertragungspfad in Beziehung steht.

18. Netzwerk nach Anspruch 17, in welchem die dritte Zellenübertragungsqualität als ein schlechtestmöglicher Wert angesehen wird, welcher vorhersagbar ist, indem Verkehrscharakteristiken von virtuellen Pfaden und eine Kapazität des physikalischen Übertragungspfades verwendet werden.

19. Verfahren zur Steuerung eines Kommunikationsnetzwerkes, welches Vermittlungsknoten für virtuelle Kanäle enthält, wobei jeder der Vermittlungsknoten für virtuelle Kanäle Zellenvermittlungsvorgänge in Einheiten von virtuellen Kanälen ausführt, und virtuelle Pfade zwischen den Vermittlungsknoten für virtuelle Kanäle vorgesehen sind, wobei das Verfahren die Schritte umfaßt:
(a) Steuern der Zellenübertragung aus den Vermittlungsknoten für virtuelle Kanäle, so daß der Zellenfluß jedes virtuellen Pfades innerhalb von vorgeschriebenen Verkehrscharakteristiken, welche für jeden virtuellen Pfad spezifiziert sind, gesteuert wird;
(b) Spezifizieren einer ersten Zellenübertragungsqualität für jeden der Vermittlungsknoten für virtuelle Kanäle, welche von einer Steuerung der Zellenübertragung bei Schritt (a) abhängig ist;
(c) Abschätzen einer Zellenübertragungsqualität von Ende zu Ende für jeden virtuellen Kanal in dem Kommunikationsnetzwerk hinsichtlich der ersten Zellenübertragungsqualität für jeden der Vermittlungsknoten für virtuelle Kanäle, welche in Schritt (b) spezifiziert werden, und einer zweiten Zellenübertragungsqualität, unabhängig von der Steuerung der Zellenübertragung bei Schritt (a); und
(d) Ausführen einer Bandbreitenverwaltung in dem Kommunikationsnetzwerk auf der Grundlage der in Schritt (c) abgeschätzten Zellenübertragungsqualität von Ende zu Ende.

20. Verfahren nach Anspruch 19, bei welchem in Schritt (a) die Steuerung der Zellenübertragung die Formung für virtuelle Pfade der Zellenflüsse in den virtuellen Pfaden erzielt.

21. Verfahren nach Anspruch 20, bei welchem in Schritt (a) die Formung für virtuelle Pfade erzielt wird, indem Formungspuffer verwendet werden, zur Speicherung von Zellen, welche von jedem der virtuellen Kanäle an virtuelle Pfade übertragen werden, und eine Übertragungssteuervorrichtung zur Steuerung einer Ausgaberate für jeden virtuellen Pfad aus den Formungspuffern.

22. Verfahren nach Anspruch 21, bei welchem in Schritt (b) die erste Zellenübertragungsqualität mit Vorgängen der Formungspuffer in Beziehung steht.

23. Verfahren nach Anspruch 22, bei welchem in Schritt (b) die erste Zellenübertragungsqualität abgeschätzt wird, indem Verkehrscharakteristiken von virtuellen Kanälen und jedes virtuellen Pfades verwendet werden.

24. Verfahren nach Anspruch 19, bei welchem in Schritt (c) die zweite Zellenübertragungsqualität mit einem Multiplexen von virtuellen Pfaden in einen physikalischen Übertragungspfad in Beziehung steht.

25. Verfahren nach Anspruch 24, bei welchem in Schritt (c) die zweite Zellenübertragungsqualität abgeschätzt wird, indem Verkehrscharakteristiken von virtuellen Pfaden und eine Kapazität des physikalischen Übertragungspfades verwendet werden.

26. Verfahren nach Anspruch 19, bei welchem in Schritt (a) die Zellenübertragung aus jedem der Vermittlungsknoten für virtuelle Kanäle durch die Schritte gesteuert wird:
Speichern von aus jedem der Vermittlungsknoten für virtuelle Kanäle zu übertragenden Zellen, getrennt für jeden virtuellen Pfad, in zumindest logisch aufgeteilten Formungspuffern;
Steuern einer Ausgaberate für jeden virtuellen Pfad aus den Formungspuffern, so daß ein Zellenfluß jedes virtuellen Pfades innerhalb vorgeschriebener Verkehrscharakteristiken, welche für jeden virtuellen Pfad spezifiziert sind, gesteuert wird;
Multiplexen der von den Formungspuffern ausgegebenen Zellen; und
Speichern der bei dem Multiplexschritt gemultiplexten Zellen in einem Ausgabepuffer, und Ausgeben der in dem Ausgabepuffer gespeicherten Zellen an einen physikalischen Übertragungspfad gemäß einer Übertragungsrate des physikalischen Übertragungspfades.

27. Kommunikationsnetzwerk, umfassend:
Vermittlungsknoten für virtuelle Kanäle, wobei jeder der Vermittlungsknoten für virtuelle Kanäle Zellenvermittlungsvorgänge in Einheiten von virtuellen Kanälen durchführt, und virtuelle Pfade zwischen den Vermittlungsknoten für virtuelle Kanäle vorgesehen sind; und
eine Ausgabesteuervorrichtung zur Steuerung der Zellenübertragung aus jedem der Vermittlungsknoten für virtuelle Kanäle, so daß der Zellenfluß jedes virtuellen Pfades innerhalb vorbestimmter Verkehrscharakteristiken, welche für jeden der virtuellen Pfade spezifiziert sind, gesteuert wird;
wobei jeder der Vermittlungsknoten für virtuelle Kanäle eine erste Zellenübertragungsqualität für jeden der Vermittlungsknoten für virtuelle Kanäle hat, welche von einer Steuerung der Zellenübertragung durch die Ausgabesteuervorrichtung abhängig ist, eine Zellenübertragungsqualität von Ende zu Ende abschätzt, für jeden virtuellen Kanal in dem Kommunikationsnetzwerk hinsichtlich der ersten Zellenübertragungsqualität für jeden der Vermittlungsknoten für virtuelle Kanäle und einer zweiten Zellenübertragungsqualität, welche von der Steuerung der Zellenübertragung durch die Ausgabesteuervorrichtung unabhängig ist, und eine Bandbreitenverwaltung auf der Grundlage der abgeschätzten Zellenübertragungsqualität von Ende zu Ende durchführt.

28. Netzwerk nach Anspruch 27, in welchem die Ausgabesteuervorrichtung die Zellenübertragung so steuert, daß eine Formung für virtuelle Pfade der Zellenflüsse in den virtuellen Pfaden erzielt wird.

29. Netzwerk nach Anspruch 27, in welchem die Ausgabesteuervorrichtung enthält:
Formungspuffer zum Speichern von Zellen, welche von jedem der virtuellen Kanäle an virtuelle Pfade übertragen werden, und
eine Übertragungssteuervorrichtung zum Steuern einer Ausgaberate für jeden virtuellen Pfad aus den Formungspuffern.

30. Netzwerk nach Anspruch 29, in welchem die erste Zellenübertragungsqualität mit Vorgängen der Formungspuffer in Beziehung steht-.

31. Netzwerk nach Anspruch 30, in welchem die erste Zellenübertragungsqualität abgeschätzt wird, indem Verkehrscharakteristiken von virtuellen Kanälen und jedes virtuellen Pfades verwendet werden.

32. Netzwerk nach Anspruch 27, in welchem die zweite Zellenübertragungsqualität mit einem Multiplexen von virtuellen Pfaden in einen physikalischen Übertragungspfad in Beziehung steht.

33. Netzwerk nach Anspruch 32, in welchem die zweite Zellenübertragungsqualität abgeschätzt wird, indem Verkehrscharakteristiken von virtuellen Pfaden und eine Kapazität des physikalischen Übertragungspfades verwendet werden.

34. Netzwerk nach Anspruch 27, in welchem die Ausgabesteuervorrichtung enthält:
zumindest logisch aufgeteilte Formungspuffer zum Speichern von Zellen, welche getrennt für jeden virtuellen Pfad von jedem der Vermittlungsknoten für virtuelle Kanäle zu übertragen sind; und
eine Übertragungssteuervorrichtung zum Steuern einer Ausgaberate für jeden virtuellen Pfad aus den Formungspuffern, so daß der Zellenfluß jedes virtuellen Pfades innerhalb vorbestimmter Verkehrscharakteristiken, welche für jeden virtuellen Pfad spezifiziert sind, gesteuert wird;
einen Multiplexer zum Multiplexen der aus den Formungspuffern ausgegebenen Zellen; und
einen Ausgabepuffer zum Speichern der von dem Multiplexer gemultiplexten Zellen, und zur Ausgabe der darin gespeicherten Zellen an einen physikalischen Übertragungspfad, gemäß einer Übertragungsrate des physikalischen Übertragungspfades.

## Revendications

1. Procédé pour commander un réseau de communication comprenant des noeuds d'échange de canal virtuel (CV) et des noeuds d'échange de trajet virtuel (TV), où chacun des noeuds d'échange CV effectue des opérations d'échange dans des unités de CV, chacun des noeuds d'échange TV effectue des opérations d'échange dans des unités de TV, et des TV sont fournis entre les noeuds d'échange CV par l'intermédiaire des noeuds d'échange TV, le procédé comprenant les étapes consistant à :
(a) commander un transfert de cellule depuis les noeuds d'échange CV jusqu'aux noeuds d'échange TV de façon qu'une circulation des cellules de chaque TV soit commandée à l'intérieur de caractéristiques de trafic prescrites qui sont spécifiées pour chaque dit TV;
(b) spécifier une qualité de transfert de cellule à chacun des noeuds d'échange CV en termes d'une première qualité de transfert de cellule dépendant d'une commande du transfert de cellule à l'étape (a), et une seconde qualité de transfert de cellule indépendante de la commande du transfert de cellule à l'étape (a);
(c) spécifier une qualité de transfert de cellule à chacun des noeuds d'échange TV par une troisième qualité de transfert de cellule indépendante de la commande du transfert de cellule à l'étape (a) seule;
(d) estimer une qualité de transfert de cellule bout à bout pour chaque CV dans le réseau de communication en termes de qualité de transfert de cellule de chacun des noeuds d'échange CV spécifiée à l'étape (b), et de qualité de transfert de cellule de chacun des noeuds d'échange TV spécifiée à l'étape (c); et
(e) exécuter une gestion de largeur de bande dans le réseau de communication de façon que la qualité du transfert de cellule bout à bout estimée à l'étape (d) devienne supérieure à une qualité désirée du service.

2. Procédé selon la revendication 1, dans lequel à l'étape (a), la commande du transfert de cellule obtient une mise en forme TV des circulations des cellules dans les TV.

3. Procédé selon la revendication 2, dans lequel à l'étape (a), la mise en forme TV est obtenue en utilisant un moyen de tampon de mise en forme pour stocker des cellules transmises depuis chacun des noeuds d'échange CV à chacun des noeuds d'échange TV et un moyen de commande de transfert pour commander la vitesse de sortie pour chaque TV à partir du moyen de tampon de mise en forme.

4. Procédé selon la revendication 3, dans lequel à l'étape (b), la première qualité de transfert de cellule est liée aux opérations du moyen de tampon de mise en forme.

5. Procédé selon la revendication 4, dans lequel à l'étape (b), la première qualité de transfert de cellule est estimée en utilisant les caractéristiques de trafic des CV et TV.

6. Procédé selon la revendication 1, dans lequel à l'étape (b), la seconde qualité de transfert de cellule est liée à un multiplexage des TV dans un trajet de transmission physique.

7. Procédé selon la revendication 6, dans lequel à l'étape (b), la seconde qualité de transfert de cellule est considérée comme la pire valeur possible qui peut être prédite en utilisant les caractéristiques de trafic des TV et la capacité du trajet de transmission physique.

8. Procédé selon la revendication 1, dans lequel à l'étape (b), la troisième qualité de transfert de cellule est liée à un multiplexage de TV dans un trajet de transmission physique.

9. Procédé selon la revendication 8, dans lequel à l'étape (c), la troisième qualité de transfert de cellule est considérée comme la pire valeur possible pouvant être prédite en utilisant les caractéristiques de trafic des TV et la capacité du trajet de transmission physique.

10. Réseau de communication, comprenant :
- des noeuds d'échange de canal virtuel (CV), chacun des noeuds d'échange CV exécutant des opérations d'échange dans des unités de CV;
- des noeuds d'échange de trajet virtuel (TV), chacun des noeuds d'échange TV exécutant des opérations d'échange dans des unités de TV, où les TV sont prévus entre les noeuds d'échange CV par l'intermédiaire des noeuds d'échange TV;
- un moyen de commande de sortie (29) pour commander un transfert de cellule depuis les noeuds d'échange CV jusqu'aux noeuds d'échange TV de façon qu'une circulation de cellules de chaque TV soit commandée dans des caractéristiques de trafic prescrites qui sont spécifiées pour chaque dit TV; et
- un moyen de commande de réseau pour commander le transfert des cellules dans le réseau de communication en :
- spécifiant une qualité de transfert de cellule à chacun des noeuds d'échange CV en termes d'une première qualité de transfert de cellule dépendant de la commande du transfert de cellule par le moyen de commande de sortie, et une seconde qualité de transfert de cellule indépendante de la commande du transfert de cellule par le moyen de commande de sortie CV;
- spécifiant une qualité de transfert de cellule à chacun des noeuds d'échange TV par une troisième qualité de transfert de cellule indépendante de la commande du transfert de cellule par le seul moyen de commande de sortie;
- estimant une qualité de transfert de cellule bout à bout pour chaque CV dans le réseau de communication en termes de la qualité de transfert de cellule de chacun des noeuds d'échange CV et la qualité de transfert de cellule de chacun des noeuds d'échange TV; et
- exécutant une gestion de largeur de bande dans le réseau de communication de façon que la qualité estimée de transfert de cellule bout à bout devienne supérieure à une qualité désirée du service.

11. Réseau selon la revendication 10, dans lequel le moyen de commande de sortie commande le transfert de cellule de manière à obtenir une mise en forme TV des circulations des cellules dans les TV.

12. Réseau selon la revendication 11, dans lequel le moyen de commande de sortie comprend : un moyen de tampon de mise en forme (42) pour stocker les cellules transmises depuis chacun des noeuds d'échange CV à chacun des noeuds d'échange TV; et un moyen de commande de transfert (44) pour commander la vitesse de sortie pour chaque TV à partir du moyen de tampon de mise en forme.

13. Réseau selon la revendication 12, dans lequel la première qualité de transfert de cellule est liée aux opérations du moyen de tampon de mise en forme.

14. Réseau selon la revendication 13, dans lequel la première qualité de transfert de cellule est estimée en utilisant les caractéristiques de trafic des CV et du TV.

15. Réseau selon la revendication 10, dans lequel la seconde qualité de transfert de cellule est liée à un multiplexage de TV dans un trajet de transmission physique.

16. Réseau selon la revendication 15, dans lequel la seconde qualité de transfert de cellule est considérée comme la pire valeur possible qui peut être prédite en utilisant les caractéristiques de trafic des TV et la capacité du trajet de transmission physique.

17. Réseau selon la revendication 10, dans lequel la troisième qualité de transfert de cellule est liée à un multiplexage de TV dans un trajet de transmission physique.

18. Réseau selon la revendication 17, dans lequel la troisième qualité de transfert de cellule est considérée comme la pire valeur possible qui peut être prédite en utilisant les caractéristiques de trafic des TV et la capacité du trajet de transmission physique.

19. Procédé pour commander un réseau de communication comprenant des noeuds d'échange CV (à canal virtuel), où chacun des noeuds d'échange CV exécute des opérations d'échange de cellules dans des unités de CV, et des TV (trajets virtuels) sont prévus entre les noeuds d'échange CV, le procédé comprenant les étapes consistant à :
(a) commander le transfert de cellules à partir des noeuds d'échange CV de façon que la circulation des cellules de chaque TV soit commandée à l'intérieur de caractéristiques de trafic prescrites qui sont spécifiées pour chaque dit TV;
(b) spécifier une première qualité de transfert de cellule pour chacun des noeuds d'échange CV qui dépend de la commande du transfert de cellule à l'étape (a);
(c) estimer une qualité de transfert de cellule bout à bout pour chaque CV dans le réseau de communication en termes de la première qualité de transfert de cellule pour chacun des noeuds d'échange CV spécifiée à l'étape (b), et une seconde qualité de transfert de cellule indépendante de la commande du transfert de cellule à l'étape (a); et
(d) exécuter une gestion de largeur de bande dans le réseau de communication sur la base de la qualité de transfert de cellule bout à bout estimée à l'étape (c).

20. Procédé selon la revendication 19, dans lequel à l'étape (a), la commande du transfert de cellule obtient la mise en forme TV de la circulation des cellules dans les TV.

21. Procédé selon la revendication 20, caractérisé en ce qu'à l'étape (a), la mise en forme TV est obtenue en utilisant des tampons de mise en forme pour stocker des cellules transmises entre chacun des CV aux TV et un contrôleur de transfert pour commander la vitesse de sortie pour chaque TV à partir des tampons de mise en forme.

22. Procédé selon la revendication 21, dans lequel à l'étape (b), la première qualité de transfert de cellule est liée aux opérations des tampons de mise en forme.

23. Procédé selon la revendication 22, dans lequel à l'étape (b), la première qualité de transfert de cellule est estimée en utilisant les caractéristiques de trafic des CV et de chaque TV.

24. Procédé selon la revendication 19, dans lequel à l'étape (c), la seconde qualité de transfert de cellule est liée à un multiplexage de TV dans un trajet de transmission physique.

25. Procédé selon la revendication 24, dans lequel à l'étape (c), la seconde qualité de transfert de cellule est estimée en utilisant les caractéristiques de trafic des TV et la capacité du trajet de transmission physique.

26. Procédé selon la revendication 19, dans lequel à l'étape (a), le transfert de cellule à partir de chacun des noeuds d'échange CV est commandé par les étapes consistant à :
- stocker des cellules devant être transmises à partir de chacun des noeuds d'échange CV de manière séparée pour chaque TV (trajet virtuel) dans au moins des tampons de mise en forme divisés de manière logique;
- commander la vitesse de sortie pour chaque TV à partir des tampons de mise en forme de façon qu'une circulation de cellules de chaque TV soit commandée à l'intérieur de caractéristiques de trafic prescrites spécifiées pour chaque TV;
- multiplexer les cellules sorties à partir des tampons de mise en forme; et
- stocker les cellules multiplexées à l'étape de multiplexage dans un tampon de sortie, et sortir les cellules stockées dans le tampon de sortie vers un trajet de transmission physique conformément à la vitesse de transmission du trajet de transmission physique.

27. Réseau de communication, comprenant :
- des noeuds d'échange CV (canal virtuel), chacun des noeuds d'échange CV exécutant des opérations d'échange de cellules dans des unités de CV, où des TV (trajets virtuels) sont prévus entre les noeuds d'échange CV; et
- un contrôleur de sortie pour commander le transfert des cellules à partir de chacun des noeuds d'échange CV de façon que la circulation des cellules de chaque TV soit commandée à l'intérieur de caractéristiques de trafic prescrites qui sont spécifiées pour chaque dit TV;
où chacun des noeuds d'échange CV présente une première qualité de transfert de cellule pour chacun des noeuds d'échange CV qui dépend de la commande du transfert des cellules par le contrôleur de sortie, estime une qualité de transfert de cellule bout à bout pour chaque CV dans le réseau de communication en termes de première qualité de transfert de cellule pour chacun des noeuds d'échange CV et une seconde qualité de transfert de cellule indépendante de la commande du transfert des cellules par le contrôleur de sortie, et exécute une gestion de largeur de bande sur la base de la qualité estimée du transfert de cellule bout à bout.

28. Réseau selon la revendication 27, dans lequel le contrôleur de sortie commande le transfert des cellules de manière à obtenir une mise en forme TV de la circulation des cellules dans les TV.

29. Réseau selon la revendication 27, dans lequel le contrôleur de sortie comprend :
- des tampons de mise en forme afin de stocker les cellules transmises à partir de chacun des CV aux TV; et
- un contrôleur de transfert pour commander la vitesse de sortie pour chaque TV à partir des tampons de mise en forme.

30. Réseau selon la revendication 29, dans lequel la première qualité du transfert de cellule est liée aux opérations des tampon de mise en forme.

31. Réseau selon la revendication 30, dans lequel la première qualité de transfert de cellule est estimée en utilisant les caractéristiques de trafic des CV et de chaque TV.

32. Réseau selon la revendication 27, dans lequel la seconde qualité de transfert de cellule est liée à un multiplexage des TV dans un trajet de transmission physique.

33. Réseau selon la revendication 32, dans lequel la seconde qualité de transfert de cellule est estimée en utilisant les caractéristiques de trafic des TV et la capacité du trajet de transmission physique.

34. Réseau selon la revendication 27, dans lequel le contrôleur de sortie comprend :
- au moins des tampons de mise en forme divisés de manière logique afin de stocker les cellules à transmettre à partir de chacun des noeuds d'échange CV de manière séparée pour chaque TV (trajet virtuel); et
- un contrôleur de transfert pour commander la vitesse de sortie pour chaque TV à partir des tampons de mise en forme de façon que la circulation des cellules de chaque TV soit commandée dans des caractéristiques de trafic prescrites qui sont spécifiées pour chaque TV;
- un multiplexeur pour multiplexer les cellules sorties à partir des tampons de mise en forme; et
- un tampon de sortie pour stocker les cellules multiplexées par le multiplexeur, et sortir les cellules qui y sont stockées sur un trajet de transmission physique conformément à une vitesse de transmission du trajet de transmission physique.
